(19)

Europäisches
Patentamt
European
Patent Office
Office européen
des brevets

(11) **EP 3 144 726 A1**

(12) **EUROPEAN PATENT APPLICATION**
published in accordance with Art. 153(4) EPC

(43) Date of publication:
**22.03.2017 Bulletin 2017/12**

(51) Int Cl.:
***G03B 21/00*** (2006.01)

(21) Application number: **14866808.0**

(86) International application number:
**PCT/CN2014/090544**

(22) Date of filing: **07.11.2014**

(87) International publication number:
**WO 2015/172536 (19.11.2015 Gazette 2015/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **15.05.2014 CN 201420248252 U**

(71) Applicant: **Iview Limited**
**Wanchai, Hong Kong (CN)**

(72) Inventors:
• **GAO, Zhiqiang**
  **Hong Kong (CN)**

• **ZHAO, Yuan**
  **Hong Kong (CN)**
• **YEUNG, Steve**
  **Hong Kong (CN)**
• **LIN, Qingyun**
  **Hong Kong (CN)**

(74) Representative: **Stuttard, Garry Philip**
**Urquhart-Dykes & Lord LLP**
**Arena Point**
**Merrion Way**
**Leeds LS2 8PA (GB)**

(54) **LINEAR DLP MICRO PROJECTOR**

(57) The invention provides a linear DLP pico-projector including a light supply device, the light supply device including: a first LED light source and a corresponding vertical collimation lens group thereof, a second LED light source and a corresponding horizontal collimation lens group thereof, and a spectroscope group; a light path switching device, the light path switching device including a fly-eye lens or an optical wand; a lighting optical system, the lighting optical system including: a first freeform surface optical component or a lens group including a first right angle prism and a second freeform surface optical component, and a second right angle prism; a DLP light modulator, and a projection lens group. The linear DLP pico-projector employs the combination of the freeform surface optical component and the right angle prism to replace the conventional reflection mirror and cemented prism to redirect the beam, thereby simplifying the optical components and enabling them to be almost linearized. Thus, the projector has a compact structure, small size, high projection performance, and low production cost.

Figure 2

EP 3 144 726 A1

**Description**

FIELD OF THE INVENTION

The invention relates to the field of digital projection display, and more particularly to a linear DLP pico-projector.

BACKGROUND OF THE INVENTION

DLP projectors are superior to LCD projectors in lumens, video image display, and contrast. The core element of the DLP projectors is DMD (Digital Micromirror Device). DMD is a light modulator developed by Texas Instruments (TI), U. S. A, which can project a three primary colors (RGB) image by controlling micromirror array with extreme high reflectivity in the presence of a lighting optical system and projection optical system.

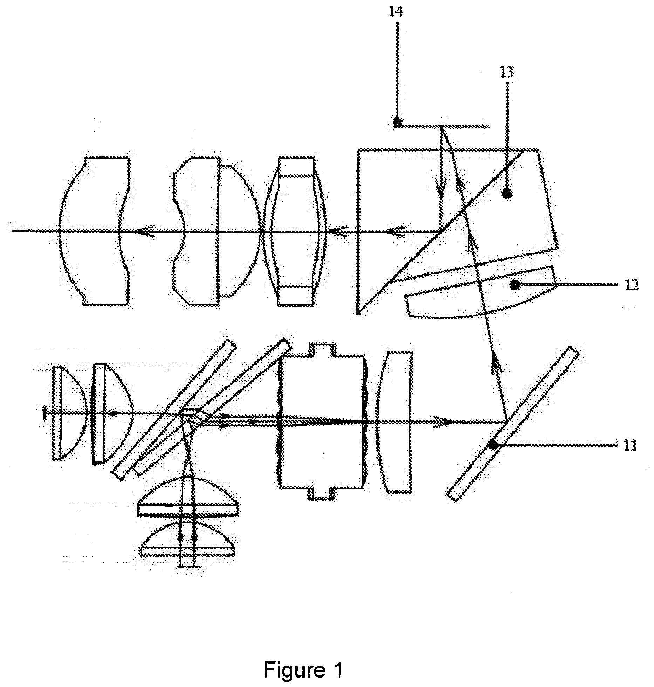

Currently, a typical DLP pico-projector includes a light supply device, a light path switching device, a lighting optical system, a DLP light modulator, and a projection lens. As shown in FIG. 1, the optical elements of the lighting optical system of the DLP pico-projector include a reflection mirror 11 configured to change the light path to a desired direction, a converging lens 12 configured to adjust the beam direction to an appropriate direction for the work of a DMD chip 14, and a cemented prism 13.

Because the lighting optical system of the DLP pico-projector includes a plurality of optical elements such as the reflection mirror 11, the converging lens 12 and the cemented prism 13, the light path of the optical elements must be designed as a "U"-shape, which significantly increases the weight and volume of the lighting optical system of the DLP pico-projector, thus the product cannot meet the requirement of consumers for light weight and small size of the DLP pico-projector (particularly portable DLP pico-projector).

The information disclosed in the background of the invention aims to facilitate the understanding of the general background of the invention, which should not be regarded directly or indirectly as admission or suggestion that the invention has been a well-known technology to one of ordinary skill in the art.

SUMMARY OF THE INVENTION

One objective of the invention is to provide a linear DLP pico-projector that has a simple and reasonable structure, employs the combination of a freeform surface optical component and a right angle prism to replace the conventional reflection mirror and cemented prism to redirect the beam, and meanwhile compensates the lighting source of the DMD chip, thereby simplifying the optical components and enabling them to be almost linearized. The projector features a compact structure, small size, low production cost, and high projection performance.

To achieve the above objective, the invention provides a linear DLP pico-projector comprising: a light supply device, the light supply device comprising: a first LED light source and a corresponding vertical collimation lens group thereof, a second LED light source and a corresponding horizontal collimation lens group thereof, and a spectroscope group; the vertical collimation lens group comprising a first collimation lens and a second collimation lens, both of which being disposed above the first LED light source; the horizontal collimation lens group comprising a third collimation lens and a fourth collimation lens, both of which being disposed at one side of the second LED light source; the spectroscope group comprising a first dichroic mirror and a second dichroic mirror; a light path switching device, the light path switching device comprising a fly-eye lens or an optical wand; a lighting optical system, the lighting optical system comprising: a first freeform surface optical component or a lens group comprising a first right angle prism and a second freeform surface optical component, and a second right angle prism; a DLP light modulator, a plane of the DMD chip being parallel to a right angle side of the second right angle prism; and a projection lens group, the projection lens group comprising an optical axis which is perpendicular to another right angle side of the second right angle prism.

Preferably, transmitted light from the horizontal collimation lens group perpendicularly intersects projection light from the vertical collimation lens group.

Preferably, the second right angle prism is disposed right above the DMD chip of the DLP light modulator.

Preferably, the first dichroic mirror reflects light from blue LED light source and transmits light from red LED light source and green LED light source; and the second dichroic mirror reflects light from red LED light source and transmits light from blue LED light source and green LED light source, to parallelize rays from three color light source and transmits them along the horizontal direction to the light path switching device.

Preferably, a reflecting surface of the first or second freeform surface optical component is a surface adapted to totally reflect an incident ray or/and an optical surface coated with reflective film.

Preferably, a freeform surface of the first or second freeform surface optical component is represented as follows:

$$Z = \frac{cr^2}{1+\sqrt{1-(1+k)c^2r^2}} + A_1X + A_2Y + A_3X^2 + A_4XY + A_5Y^2 + A_6X^3 + A_7X^2Y + A_8XY^2 + A_9Y^3$$

Z represents surface height, X and Y at each occurrence represent projection coordinate of the surface height on the optical axis, A1-A9 represent location parameter, and c and k represent curvature parameter.

Advantages of the invention are summarized as follows. The linear DLP pico-projector of the invention features a simple and reasonable structure, employs the combination of the freeform surface optical component and the right angle prism to replace the conventional reflection mirror and cemented prism to redirect the beam, and meanwhile compensates the lighting source of the DMD, thereby simplifying the optical components and enabling them to be almost linearized. Thus, the projector has a compact structure, small size, high projection performance, and low production cost.

BRIEF DESCRIPTION OF THE DRAWINGS

FIG. 1 is a schematic diagram of a linear DLP pico-projector in the prior art;

FIG. 2 is a schematic diagram of a linear DLP pico-projector in Example 1 of the invention; and

FIG. 3 is a schematic diagram of a linear DLP pico-projector in Example 2 of the invention.

DETAILED DESCRIPTION OF THE EMBODIMENTS

For clear understanding of the objectives, features and advantages of the invention, detailed description will be given below in conjunction with accompanying drawings and specific embodiments. It should be noted that the examples are only meant to explain the invention, and not to limit the scope of the invention.

Unless otherwise indicated, terms "comprise" or "comprising" in the specifications and claims of the invention should be considered as including stated elements or components, and not excluding other elements or components.

Example 1

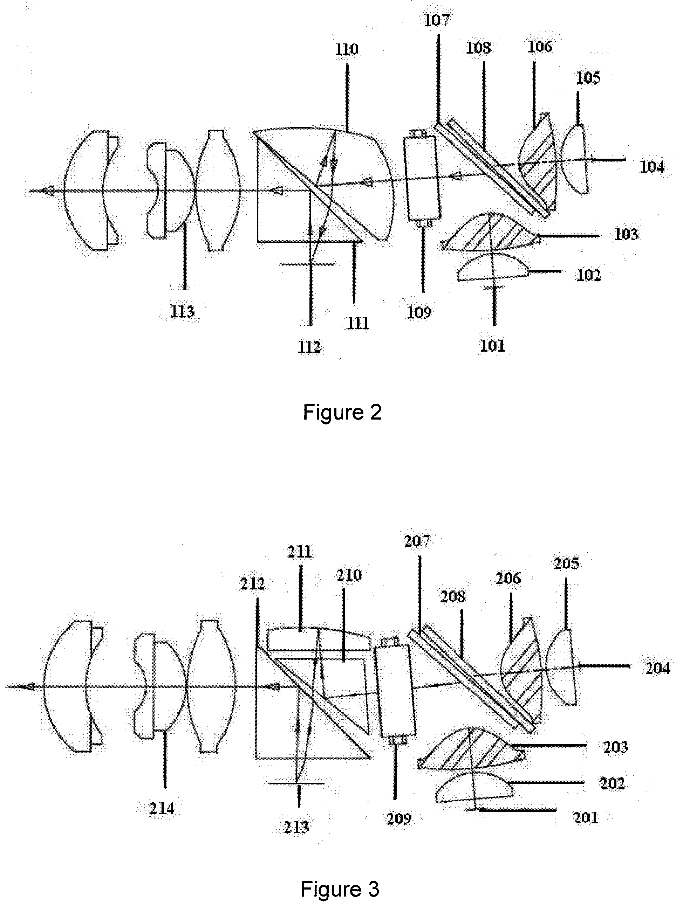

As shown in FIG. 2, a linear DLP pico-projector comprises along the light path: a light supply device, a light path switching device, a lighting optical system, a DLP light modulator, and a projection lens group. The lighting optical system comprises a first freeform surface optical component and a second right angle prism. The linear DLP pico-projector employs the combination of the freeform surface optical component and the right angle prism to replace the conventional reflection mirror and cemented prism to redirect the beam, and meanwhile the ray is totally reflected on the surface of the freeform surface optical component, which greatly compensates the lighting source of DMD, solves the contradiction of minimizing the projector and improving the properties of the projector. The resulting projector has a compact structure and low production cost, and is light and easy to carry.

The light supply device comprises a first LED light source 101 and a corresponding vertical collimation lens group thereof, a second LED light source 104 and a corresponding horizontal collimation lens group thereof, and a spectroscope group. The vertical collimation lens group comprises a first collimation lens 102 and a second collimation lens 103, both of which are disposed above the first LED light source 101 to receive and parallelize rays from the first LED light source 101. The horizontal collimation lens group comprises a third collimation lens 105 and a fourth collimation lens 106, both of which are disposed at the left of the second LED light source to receive and parallelize rays from the second LED light source 104. The transmitted light from the horizontal collimation lens group perpendicularly intersects the projection light from the vertical collimation lens group. The spectroscope group comprises a first dichroic mirror 107 and a second dichroic mirror 108. The first dichroic mirror 107 reflects light from blue LED light source and transmits light from red LED light source and green LED light source; and the second dichroic mirror 108 reflects light from red LED light source and transmits light from blue LED light source and green LED light source. The spectroscope group is configured to parallelize rays from the blue, red, and green LED light source and transmits them along the horizontal direction to the light path switching device.

The light path switching device comprises a fly-eye lens 109 or an optical wand.

The lighting optical system comprises along the light transmission direction: a first freeform surface optical component 110 and a second right angle prism 111. The second right angle prism 111 is disposed right above the DMD chip 112 of the DLP light modulator, one right angle side thereof is parallel to the plane of the DMD chip 112, and the other right angle side thereof is perpendicular to the optical axis of the projection lens group. The reflecting surface of the first freeform surface optical component 110 is a surface adapted to totally reflect an incident ray or/and an optical surface coated with reflective film. The freeform surface of the first surface optical component 110 is represented as follows:

$$Z = \frac{cr^2}{1+\sqrt{1-(1+k)c^2r^2}} + A_1X + A_2Y + A_3X^2 + A_4XY + A_5Y^2 + A_6X^3 + A_7X^2Y + A_8XY^2 + A_9Y^3$$

Z represents surface height, X and Y at each occurrence represent projection coordinate of the surface height on the optical axis, A1-A9 represent location parameter, and c and k represent curvature parameter.

The light beam from the fly-eye lens 109 is transmitted to the first freeform surface optical component 110 and is totally reflected twice therein, and the emergent light from the first freeform surface optical component first enters the second right angle prism 111 and then enters the DMD chip 112 of the DLP light modulator. When the lens of the DMD chip 112 is open, the light beam is modulated by the DMD chip 112 and transmitted to the hypotenuse of the second right angle prism 111 where the light beam is totally reflected and enters the projection lens group horizontally. The linear DLP pico-projector employs the first freeform surface optical component 110 to replace the conventional reflection mirror and cemented prism to redirect the beam, and meanwhile the ray is totally reflected on the surface of the freeform surface optical component, which greatly compensates the lighting source of DMD chip 112, solves the contradiction of minimizing the projector and improving the properties of the projector. The resulting projector has a compact structure and low production cost, and is light and easy to carry.

Example 2

Compared with Example 1, the linear DLP pico-projector is basically the same as that in Example 1 except the slight alteration of the lighting optical system. As shown in FIG. 3, the lighting optical system of the linear DLP pico-projector comprises along the light transmission direction: a first right angle prism 210, a second freeform surface optical component 211, and a second right angle prism 212. The lens group formed by the first right angle prism 210 and the second freeform surface optical component 211 takes the place of the first freeform surface optical component 110 in example 1. The second freeform surface optical component 211 is parallel to one right angle side of the first right angle prism 210. One right angle side of the second right angle prism 212 is parallel to the plane of the DMD chip 213, and the other right angle side is perpendicular to the optical axis of the projection lens group.

In the lighting optical system, the light beam from the fly-eye lens 209 is totally reflected on the hypotenuse of the first right angle prism 210, and then is transmitted to the second freeform surface optical component 211 where the light is totally reflected again. The emergent light from the second freeform surface optical component 211 passes through the first right angle prism 210 and the second right angle prism 212 and then enters the DMD chip 213. When the lens of the DMD chip 213 is open, the light beam is modulated by the DMD chip 213 and transmitted to the hypotenuse of the second right angle prism 212 where the light beam is totally reflected and enters the projection lens group horizontally. The linear DLP pico-projector employs the first right angle prism 210 and the second freeform surface optical component 211 to replace the conventional reflection mirror and cemented prism to redirect the beam, thereby greatly compensates the lighting source of the DMD chip 213.

In summary, the linear DLP pico-projector of the invention features a simple and reasonable structure, employs the combination of the freeform surface optical component and the right angle prism to replace the conventional reflection mirror and cemented prism to redirect the beam, and meanwhile compensates the lighting source of the DMD chip, thereby simplifying the optical components and enabling them to be almost linearized. Thus, the projector has a compact structure, small size, high projection performance, and low production cost.

While particular embodiments of the invention have been shown and described, it will be obvious to those skilled in the art that changes and modifications may be made without departing from the invention in its broader aspects, and therefore, the aim in the appended claims is to cover all such changes and modifications as fall within the true spirit and scope of the invention.

**Claims**

1. A linear DLP pico-projector, comprising:

a light supply device, the light supply device comprising: a first LED light source and a corresponding vertical collimation lens group thereof, a second LED light source and a corresponding horizontal collimation lens group thereof, and a spectroscope group; the vertical collimation lens group comprising a first collimation lens and a second collimation lens, both of which being disposed above the first LED light source; the horizontal collimation lens group comprising a third collimation lens and a fourth collimation lens, both of which being disposed at one side of the second LED light source; the spectroscope group comprising a first dichroic mirror and a second dichroic mirror;

a light path switching device, the light path switching device comprising a fly-eye lens or an optical wand;

a lighting optical system, the lighting optical system comprising: a first freeform surface optical component or a lens group comprising a first right angle prism and a second freeform surface optical component, and a second right angle prism;

a DLP light modulator, the DLP light modulator comprising a DMD chip, a plane of the DMD chip being parallel to a right angle side of the second right angle prism; and

a projection lens group, the projection lens group comprising an optical axis which is perpendicular to another right angle side of the second right angle prism.

2. The linear DLP pico-projector of claim 1, **wherein** transmitted light from the horizontal collimation lens group perpendicularly intersects projection light from the vertical collimation lens group.

3. The linear DLP pico-projector of claim 1, **wherein** the second right angle prism is disposed right above the DMD chip of the DLP light modulator.

4. The linear DLP pico-projector of claim 1, **wherein** the first dichroic mirror reflects light from blue LED light source and transmits light from red LED light source and green LED light source; and the second dichroic mirror reflects light from red LED light source and transmits light from blue LED light source and green LED light source.

5. The linear DLP pico-projector of any one of claims 1-4, **wherein** a reflecting surface of the first or second freeform surface optical component is a surface adapted to totally reflect an incident ray or/and an optical surface coated with reflective film.

6. The linear DLP pico-projector of claim 5, **wherein** a freeform surface of the first or second freeform surface optical component is represented as follows:

$$Z = \frac{cr^2}{1+\sqrt{1-(1+k)c^2r^2}} + A_1X + A_2Y + A_3X^2 + A_4XY + A_5Y^2 + A_6X^3 + A_7X^2Y + A_8XY^2 + A_9Y^3$$

Z represents surface height, X and Y at each occurrence represent projection coordinate of the surface height on the optical axis, A1-A9 represent location parameter, and c and k represent curvature parameter.

Figure 1

Figure 2

Figure 3

## INTERNATIONAL SEARCH REPORT

| International application No. |
| --- |
| PCT/CN2014/090544 |

### A. CLASSIFICATION OF SUBJECT MATTER

G03B 21/00 (2006.01) i

According to International Patent Classification (IPC) or to both national classification and IPC

### B. FIELDS SEARCHED

Minimum documentation searched (classification system followed by classification symbols)

G03B; G02B; H04N

Documentation searched other than minimum documentation to the extent that such documents are included in the fields searched

Electronic data base consulted during the international search (name of data base and, where practicable, search terms used)

CNABS, CNTXT, VEN: free-form surface, DLP, DMD; project+, free w curve?, prism

### C. DOCUMENTS CONSIDERED TO BE RELEVANT

| Category* | Citation of document, with indication, where appropriate, of the relevant passages | Relevant to claim No. |
| --- | --- | --- |
| PX | CN 203838464 U (IVIEW LIMITED), 17 September 2014 (17.09.2014), see description, pages 1-4, figures 1-3, and claims 1-6 | 1-6 |
| Y | TW 200937102 A (UPSTREAM ENGINEERING OY), 01 September 2009 (01.09.2009), see description, pages 16 and 22, and figures 7 and 13C | 1-6 |
| Y | CN 202837791 U (IVIEW LIMITED), 27 March 2013 (27.03.2013), see description, pages 1-5, and figures 1-4 | 1-6 |
| Y | CN 103529629 A (IVIEW LIMITED), 22 January 2014 (22.01.2014), see description, pages 1-5, and figures 1-4 | 1-6 |
| Y | CN 102799055 A (SAMSUNG ELECTRONICS CO., LTD.), 28 November 2012 (28.11.2012), see description, pages 1-4, and figures 1-3 | 1-6 |

☐ Further documents are listed in the continuation of Box C.      ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 22 January 2015 (22.01.2015) | **28 January 2015 (28.01.2015)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **YANG, Fang** Telephone No.: (86-10) **62085622** |
| --- | --- |

Form PCT/ISA/210 (second sheet) (July 2009)

## INTERNATIONAL SEARCH REPORT
### Information on patent family members

| International application No. |
| --- |
| **PCT/CN2014/090544** |

| Patent Documents referred in the Report | Publication Date | Patent Family | Publication Date |
| --- | --- | --- | --- |
| CN 203838464 U | 17 September 2014 | None | |
| TW 200937102 A | 01 September 2009 | US 2009190101 A1 | 30 July 2009 |
| | | WO 2009095406 A1 | 06 August 2009 |
| CN 202837791 U | 27 March 2013 | None | |
| CN 103529629 A | 22 January 2014 | None | |
| CN 102799055 A | 28 November 2012 | KR 20120131359 A | 05 December 2012 |
| | | US 2012300180 A1 | 29 November 2012 |
| | | US 8905555 B2 | 09 December 2014 |
| | | EP 2527906 A3 | 04 December 2013 |
| | | EP 2527906 A2 | 28 November 2012 |
| | | JP 2012247778 A | 13 December 2012 |

Form PCT/ISA/210 (patent family annex) (July 2009)